# EUROPÄISCHE PATENTANMELDUNG

(11) **EP 0 761 077 A1**
(43) Veröffentlichungstag der Anmeldung: **12.03.1997**
(21) Anmeldenummer: 96103102.8
(22) Anmeldetag: 01.03.1996
(51) Int. Cl.: A01B 1/00, A01B 33/14

(54) **Vorrichtung für die Bodenbearbeitung**

(30) Priorität: 25.08.1995 DE 29513777 U
(71) Anmelder: RDZ DUTZI GmbH, 76698 Ubstadt-Weiher (DE)
(72) Erfinder: Dutzi, Friedhelm, 76698 Ubstadt-Weiher (DE)
(74) Vertreter: Petersen, Frank, Dipl.-Ing.

(57) **Zusammenfassung**

Die Erfindung betrifft eine Vorrichtung für die Bodenbearbeitung mit einer rotierend angetriebenen horizontal liegenden Welle (1), auf der mit axialem Abstand zueinander über den Umfang versetzte Zinken (3) angeordnet sind, wobei der Abstand der Wellenachse zum Boden geringer ist als der Radius des von der Zinkenspitze beschriebenen Umkreises. Um bei einem derartigen Zinkenrotor zu erreichen, daß er sich automatisch von organischem Material befreit, wird vorgeschlagen, die Zinken in Rotationsrichtung federnd auszubilden und einen Anschlag (15,17) vorzusehen, gegen den ein nach Kontaktverlust mit dem Boden in Rotationsrichtung nach vorne federnder Zinken (3) schlägt, um somit das von ihm mitgeschleppte organische Material abzuwerfen.

## Beschreibung

Die Erfindung betrifft eine Vorrichtung für die Bodenbearbeitung mit einer rotierend angetriebenen horizontal angeordneten Welle, auf der mit axialem Abstand zueinander über den Umfang versetzte Zinken angeordnet sind, wobei der Abstand der Wellenachse zum Boden geringer ist als der Radius des von der Zinkenspitze beschriebenen vertikal liegenden Umkreises.

Vorrichtungen dieser Art sind bei den unterschiedlichsten Bodenbearbeitungsgeräten als Zinken- bzw. Krümelrotor oder ähnliches bekannt, bei denen sie zur Zerkleinerung von aufgebrochenem Boden benutzt werden. Sie werden aber beispielsweise auch in Vorrichtungen zum Säen von Saatgut mit Minimalbodenbearbeitung sowie Direktsaat eingesetzt, um auf dem Boden liegendes organisches Material zusammen mit losem Erdreich zu verteilen, zu zerkleinern und zu egalisieren.

Wenn die Zinken einer solchen horizontal angeordneten Walze auf ihrer vertikal liegenden Flugbahn im Bodenbereich mit harten Widerständen, zum Beispiel Steinen oder ähnlichem in Kontakt kommen, brechen sie häufig ab oder werden deformiert.

Dies kann man gegebenenfalls dadurch vermeiden, daß die Zinken sehr hart ausgebildet werden, wobei dies aber den Nachteil hat, daß sehr viel Erdreich durch diese harten Zinken nach hinten aus der Vorrichtung ausgeworfen wird. Dies wiederum kann man etwas vermindern, indem die Welle mit einer niedrigeren Geschwindigkeit rotieren gelassen wird. Dabei hat man aber den Nachteil, daß das organische Material von der mit Zinken versehenen Welle nicht nach hinten abgeworfen wird sondern bei der Rotation mitgenommen wird, wodurch sich die Vorrichtung relativ schnell verstopft.

Aufgabe der vorliegenden Erfindung ist es daher, eine gattungsgemäße Vorrichtung derart weiterzubilden, daß sie unempfindlicher wird gegen Hindernisse im Boden und außerdem eine gute Abwurfcharakteristik aufweist.

Diese Aufgabe wird erfindungsgemäß dadurch gelöst, daß die auf der Welle befestigten Zinken in Rotationsrichtung federnd ausgebildet sind und die Vorrichtung einen Anschlag aufweist, gegen den ein nach Kontaktverlust mit dem Boden in Rotationsrichtung nach vorne federnder Zinken schlägt.

Der Gegenstand der Erfindung hat den Vorteil, daß aufgrund der federnden Ausbildung des Zinkens dieser einem Hindernis im Boden durch Zurückfedern ausweichen kann, so daß er nicht abbricht. Andererseits federt der Zinken aber bei jedem Bodenkontakt aufgrund des ihm entgegengebrachten Widerstandes etwas ein. Dieser Widerstand setzt in dem Moment, wo der Zinken wieder aus dem Boden austritt, schlagartig aus, woraufhin der Zinken über seine ursprüngliche Position hinaus nach vorne federt. Bei dieser Vorwärtsbewegung wird bei der erfindungsgemäßen Vorrichtung dem nach vorne federnden Zinken ein Anschlag als Hindernis in den Weg gestellt, so daß er schlagartig abgebremst wird, was wiederum dazu führt, daß von der Zinkenspitze durch das Erdreich hindurchgeschlepptes organisches Material abgeschleudert wird. Damit wird verhindert, daß der Zinken dieses organische Material auf der von ihm beschriebenen Kreisbahn mitschleppt und wieder vor die rotierende Welle wirft, wo es sich auf Dauer ansammeln würde und die Maschine wie oben beschrieben verstopft.

Vorteilhafterweise ist der Anschlag dabei direkt an der Welle mitrotierend befestigt, womit gleichzeitig erreicht wird, daß beim Vorfedern des Zinkens seine Befestigung an der Welle nicht überansprucht wird, die insbesondere über eine radial zur Wellenachse gerichtete Verschraubung erfolgen kann.

Eine niedrigere Belastung der Befestigung wird durch eine zum Zinken hin konvexe Ausgestaltung des Anschlages noch unterstützt, durch die das Abbremsen des Zinkens weniger abrupt erfolgt.

Der an der Welle mitrotierende Anschlag kann dabei vorteilhafterweise noch mit den federnden Zinken führenden Seitenwangen versehen sein, so daß der Zinken nicht seitlich ausweichen kann und sich damit in bezug auf vor- oder nachgeordnete Maschinenteile nicht verstellen kann.

Bei einer bevorzugten Ausführungsform sind diese senkrecht zur Wellenachse angeordneten Seitenwangen in Umfangsrichtung entlang der Welle verlängert, so daß ein zu einem Auge aufgerolltes Ende eines Zinkens zwischen sie einzuführen und mittels eines parallel zur Wellenachse durch das genannte Auge hindurchlaufenden Querbolzens an der Welle zu befestigen ist. So wird eine einfache Montage bzw. Demontage ermöglicht.

Es besteht hier selbstverständlich auch die Möglichkeit, die Halterungen des Querbolzens an der Welle als separate Teile auszuführen und unabhängig von den genannten Seitenwangen an der Welle zu befestigen, jedoch würde dies einen erhöhten Fertigungsaufwand bedeuten.

Bei einer demgegenüber vorteilhafteren Ausführung wird vielmehr zwischen Seitenwangen eines Anschlages, der einem ersten Zinken zugeordnet ist, auf die beschriebene Weise ein zweiter Zinken befestigt, der dem ersten Zinken diametral gegenüber an der Welle angeordnet ist, wobei an den Seitenwangen des dem zweiten Zinken zugeordneten Anschlages der erste Zinken auf die gleiche Weise befestigt ist.

Ein besonders vorteilhaftes Einfederverhalten eines Zinkens erhält man, wenn sein im wesentlichen federnder Abschnitt, der sich von seiner Befestigung an der Welle erstreckt, spiralförmig um die Welle herumverläuft.

Dabei kann der Zinken dann mit einer ihm parallel geschalteten Blattfeder zusammenwirken, die so vorgeformt ist, daß sie sich mit steigender Einfederung des Zinkens sukzessive an ihn anschmiegt und damit dessen Gesamtfedersteifigkeit erhöht.

Diese Blattfeder weist an ihrem einen Ende dabei vorteilhafterweise einen den Zinken umgreifende Fangöse auf, so daß auch bei einer Rückfederung des Zinkens eine Mitnahme der Blattfeder sichergestellt ist und der Zinken auch auf diese Weise vor einer Überbeanspruchung bewahrt werden kann.

Es hat sich für die Auswurfcharakteristik des Zinkens dabei als günstig erwiesen, wenn der Zinken einen im wesentlichen rechteckigen Querschnitt aufweist und an seinem Ende, mit dem er auf dem Boden wirkt, eine Schränkung aufweist, die in einer Größenordnung von etwa 15° liegt.

Um den Verschleiß an diesem Ende beschränken zu können, kann der Zinken hier mit einem Verschleißschuh oder auch Bodenaufreißzahn versehen werden, der andererseits aber auch dazu dienen kann, die Bodenbearbeitung selbst zu intensivieren.

Vorteilhafterweise wird die bisher beschriebene Vorrichtung in eine Sämaschine mit wenigstens einreihig angeordneten Sävorrichtungen eingebaut.

Bei wenigstens zweireihig angeordneten Sävorrichtungen hat es sich als vorteilhaft erwiesen, daß die Zinken zwischen den Säscharen der ersten Reihe nach vorne durchgreifen, um sich vor den Säscharen ansammelndes organisches Material nach hinten durchzuziehen, wobei aufgrund der beschriebenen Schleuderbewegung beim Austreten der Zinken aus ihrem Kontakt mit dem Boden und ihrer Bewegung beim Schlag gegen den Anschlag dann sichergestellt wird, daß dieses organische Material mit höherer Geschwindigkeit zwischen den nachgeschalteten Säscharen der zweiten Reihe hindurchfliegt.

Dabei zeigte sich, daß mit den hier beschriebenen Zinken das aufgewirbelte Erdreich sich sehr schnell ablegt, während das organische Material wie zum Beispiel Stroh oder ähnliches etwas langsamer wieder absinkt, so daß ausgebrachtes Saatgut zuerst von Erdreich bedeckt und erst danach von einer Matte aus durchgewirbeltem organischen Material abgedeckt wird. Dies ist für das Keimen von Saatgut ideal.

Weitere Vorteile und Merkmale der Erfindung ergeben sich aus der nachfolgenden Beschreibung von Ausführungsbeispielen. Dabei zeigt
- Figur 1: eine erfindungsgemäße Vorrichtung mit einem vor dem Zinken liegenden Anschlag;
- Figur 2: eine erfindungsgemäße Vorrichtung mit an der Welle mitrotierendem Anschlag;
- Figur 3: eine erfindungsgemäß ausgerüstete Sämaschine zur Direktsaat;
- Figur 4: eine weitere erfindungsgemäße Vorrichtung mit an der Welle mitrotierendem Anschlag.

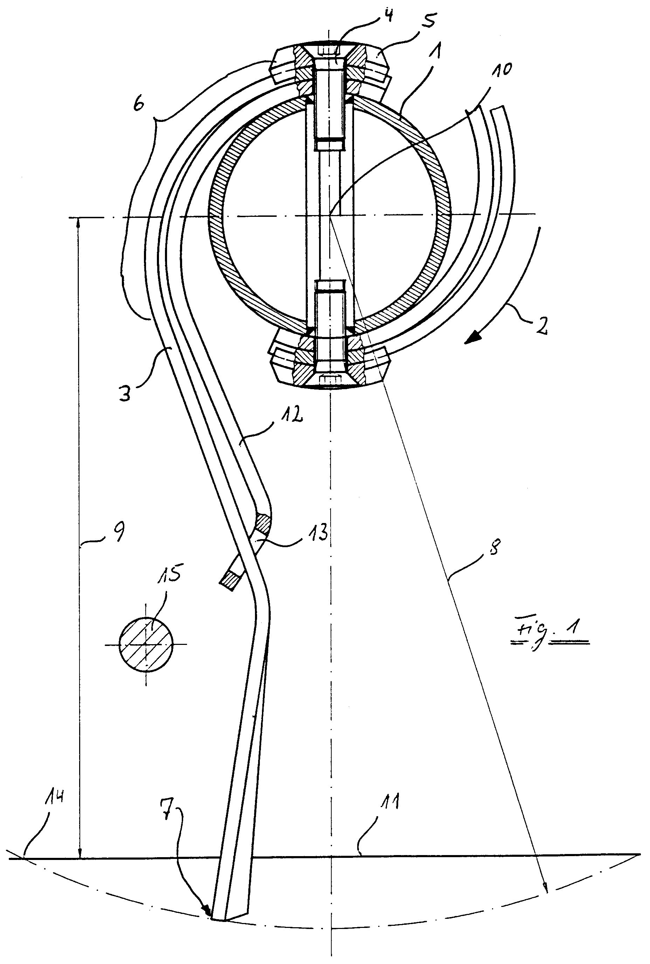

In Figur 1 erkennt man eine Welle 1, die gemäß dem Pfeil 2 rotierend angetrieben ist. Auf dieser horizontal angeordneten Welle ist ein Zinken 3 dargestellt, von dem über die Länge der Welle eine Vielzahl mit axialem Abstand zueinander und über den Umfang versetzt angeordnet sind.

Der Zinken 3 ist über ein mit einer Schraube 4 an der Welle 1 befestigtes Klemmstück 5 auf der Welle befestigt. Er verläuft in seinem sich an diesem Befestigungspunkt anschließenden Abschnitt 6 in einer zur Wellenachse senkrechten Ebene spiralförmig um die Welle herum, so daß er sich bei Belastung federnd verformen kann.

Die Spitze 7 des Zinkens beschreibt bei der Rotation der Welle einer vertikal liegenden Umkreis mit dem Radius 8, wobei dieser Radius größer ist als der Abstand 9 der horizontal liegenden Wellenachse 10 zur Oberfläche des Bodens 11.

Sobald die Spitze 7 des Zinkens 3 auf einen Widerstand stößt, weicht der Zinken einfedernd aus, wobei er im hier dargestellten Beispiel sich dabei an eine sich parallel zu ihm erstreckende Blattfeder 12 anlegt, die vorgeformt ist, so daß sie erst mit steigender Einfederung des Zinkens mit ihm zusammenwirkt und dabei seine Gesamtfedersteifigkeit erhöht. An ihrem vorderen Ende ist diese Blattfeder 12 mit einer Fangöse 13 versehen, die den Zinken 3 umgreift, so daß auch bei einer Rückfederung des Zinkens 3 die Blattfeder 12 mitgenommen wird und so einen gewissen Versteifungseffekt in bezug auf dessen Federkonstante hat.

Beim Rotieren der Welle 1 trifft die Spitze 7 des Zinkens 3 irgendwann auf die Bodenoberfläche 11. Je nach Härte des Zinkens 3 wird die Spitze 7 dann durch das Erdreich gezogen oder aber auf der Oberfläche 11 entlanggeschleppt. Dabei nimmt der Zinken 3 auf der Erdoberfläche liegendes organisches Material mit. An der mit 14 gekennzeichneten Stelle verliert dann die Zinkenspitze 7 den Kontakt mit der Oberfläche 11 des Bodens, woraufhin sich der wie eine Feder vorgespannte Zinken schlagartig entspannt und in Rotationsrichtung nach vorne schnellt. Dabei schlägt er gegen einen Anschlag 15, so daß das auf der Spitze 7 hängende organische Material abgeschleudert wird.

Die derart frei gewordene Spitze 7 wird dann bei der weiteren Rotation der Welle 1 an dem Anschlag 15 vorbeigeschleppt und der Zinken 3 federt dann in seine normale Stellung zurück, in der er von der Welle 1 wieder einen Umlauf herumbewegt wird, bis er wieder in Kontakt mit der Bodenoberfläche 11 kommt und der sich bisher beschriebene Vorgang wiederholt.

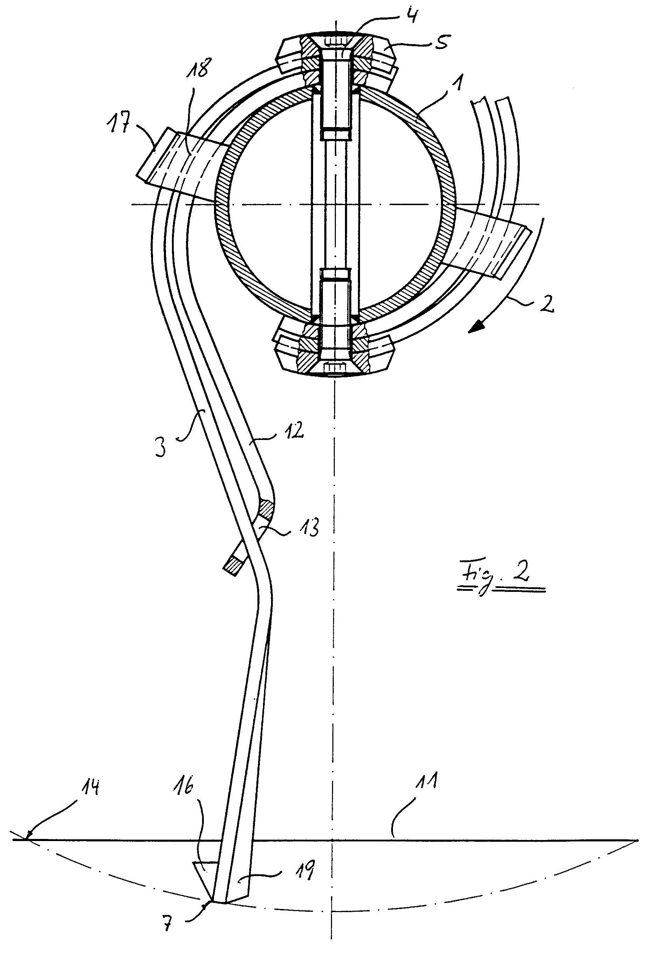

In der Figur 2 ist eine Ausführungsform beschrieben, die vom Zinken her im wesentlichen identisch ist mit der in Figur 1 dargestellten Ausführungsform.

Allerdings weist der Zinken 3 hier an seiner Spitze 7 noch zusätzlich einen Bodenaufreißzahn 16 auf, mit dem eine intensivere Bodenbearbeitung möglich ist. Da ein derartiger Bodenaufreißzahn nicht an einem wie in Figur 1 beschriebenen separat an der Vorrichtung befestigten Anschlag 15 vorbeigezogen werden kann, ist bei der in Figur 2 dargestellten Ausführungsform ein Anschlag 17 direkt an der Welle 1 festgeschweißt und rotiert mit dieser mit.

Bei dieser Ausführungsform schlägt der eingefederte Zinken in dem Moment, wo seine Spitze 7 den Kontakt mit dem Boden an der Stelle 14 verliert, nach vorne und kann aufgrund der längeren freien Strecke bis zum Anschlag 17 das von ihm mitgeschleppte organische Material besonders wirkungsvoll abschleudern. Dabei wird aufgrund des Anschlages 17 auch erreicht, daß der Zinken 3 nicht zu weit über seine Grundstellung hinaus federt und damit seine Befestigung am Klemmstück 5 überbeansprucht und hier gegebenenfalls abbricht.

Der mit der Welle 1 mitrotierende Anschlag 17 weist seitlich vom Zinken 3 verlaufende Seitenwangen 18 auf, die eine Führung des Zinkens 3 bewirken, so daß dieser nicht seitlich ausweichen kann. Dies wird zum Beispiel dadurch verursacht, daß die Spitze 7 des Zinkens 3 eine Verschränkung 19 aufweist, durch die eine den Zinken seitlich abdrängende Kraft bewirkt wird. Diese Verschränkung bewirkt andererseits aber ein besonders gutes Abwurfverhalten.

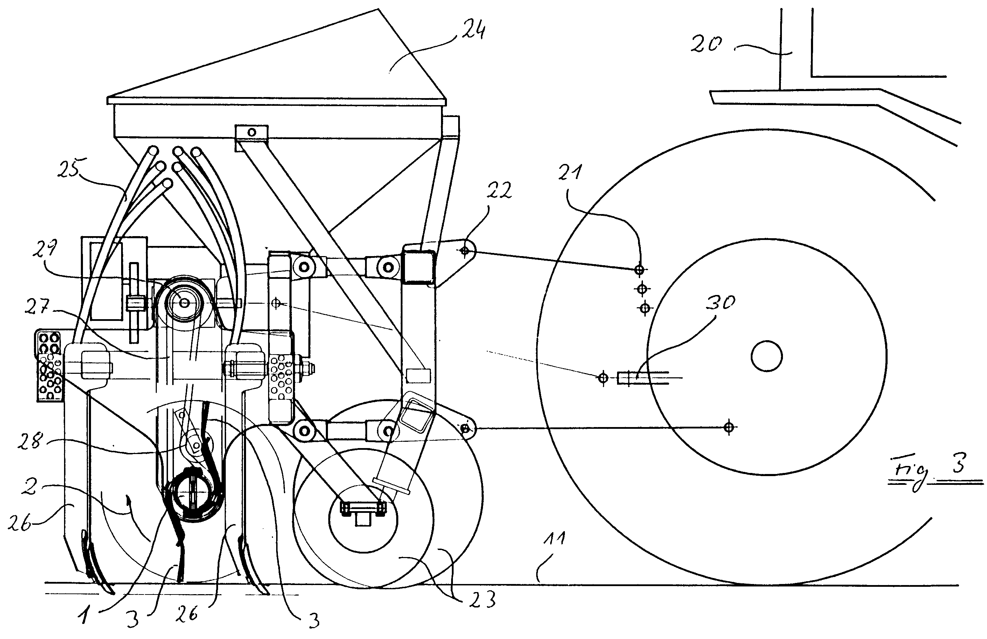

In der Figur 3 ist die in Figur 2 dargestellte Vorrichtung eingebaut in eine Sämaschine zur Direktsaat. Diese Maschine wird von einem Ackerschlepper 20 gezogen, bei dem sie in bekannter Weise über Ankoppelpunkte 22 an dessen Dreipunktbefestigung 21 befestigt ist (hier nur schematisch dargestellt).

Die Sämaschine wird von Rädern 23 getragen und weist an ihrem oberen Ende einen Saatgutbehälter 24 auf, aus dem über Saatzuführrohre 25 Saatgut an Säschare 26 abgegeben wird. Diese Säschare laufen knapp unterhalb der Bodenoberfläche 11, wobei sie Särillen ziehen, in die das Saatgut abgelegt wird. Gleichzeitig sammelt sich dabei vor den Säscharen aber auch organisches Material an.

Hinter den vorderen Säscharen ist eine gemäß dem Pfeil 2 rotierende Welle 1 angeordnet. Diese wird über ein Getriebe 29 mit einem Keilriemen 27 und einer Spannrolle 28 von der Zapfwelle 30 angetrieben. Sie trägt über ihren Umfang verteilt mehrere axial zueinander beabstandete Zinken 3, die jeweils zwischen zwei Säscharen 26 der vorderen Reihe hindurchgreifen und sich vor den Säscharen 26 sammelndes organisches Material ergreifen, nach hinten ziehen und dann, wenn die Zinken den Kontakt mit der Bodenoberfläche 11 verlieren, nach hinten zwischen den hinteren Säscharen 26 hinausschleudern.

Dabei setzt sich das von den Zinken nach hinten geworfene Erdreich relativ schnell wieder ab, womit es direkt das mit den Säscharen 26 abgelegte Saatgut bedeckt. Das organische Material, wie zum Beispiel Stroh, setzt sich demgegenüber langsamer ab und bildet dann eine auf dem bereits abgesetzten Erdreich liegende Matte, die das Saatgut optimal vor unerwünschter Austrocknung und den Boden vor Erosion schützt.

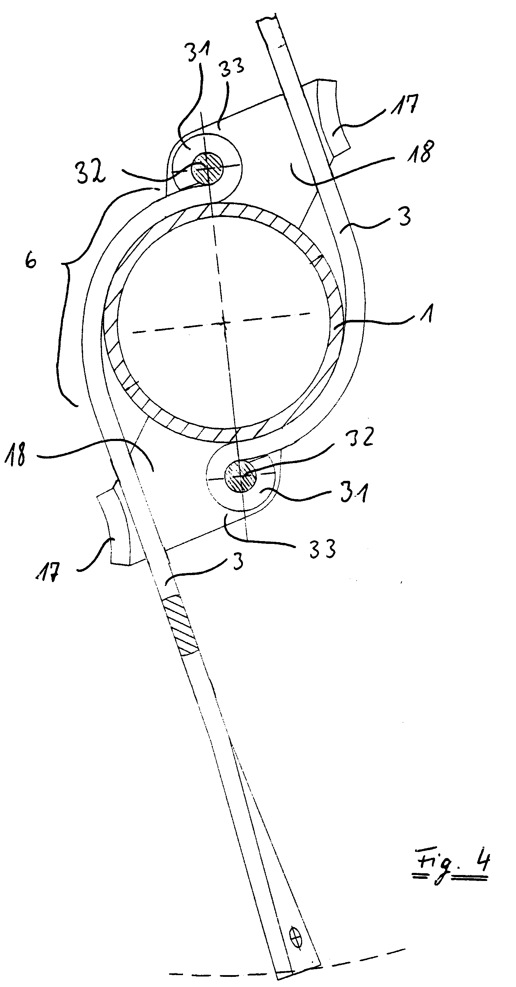

In der Figur 4 wird eine weitere Ausgestaltung einer Welle 1 mit mitrotierenden Anschlägen 17 dargestellt. Zum einen sind diese Anschläge 17 hier zum Zinken 3 hin konkav ausgestaltet, so daß ein beim Zurückfedern gegen sie anschlagender Zinken sich an diese anlegen kann, so daß das Abbremsen des Zinkens weniger abrupt erfolgt und auch ein unerwünschtes Auftreten von Spannungspitzen in ihm zu vermeiden ist.

Die hier dargestellte Zinken sind an dem Ende, an dem sie an der Welle befestigt werden, zu einem Auge 31 aufgewickelt. Durch dieses Auge ist zur Befestigung des Zeichens an der Welle 1 ein Querbolzen 32 geschoben, der durch Halterungen 33 hindurchläuft, die senkrecht von der Welle abstehend an dieser angeschweißt sind. Diese Halterungen 33 gehen im hier dargestellten Beispiel einstückig über in die Seitenwangen 18 des nächstliegenden Anschlages 17. Dabei ist dieser nächstliegende Anschlag 17 einem anderen Zinken zugeordnet, der diametral gegenüber an der Welle auf die gleiche Weise befestigt ist.

Die hier beschriebene Befestigung hat insbesondere den Vorteil, daß an der Befestigungsstelle des Zinkens 3 an der Welle 1 durch das Auge 31 im Zinken gleichmäßigere Spannungsverläufe möglich sind und somit eine geringere Gefahr eines Zinkenbruches besteht.

Im übrigen funktioniert der Zinken wie bei den oben beschriebenen Vorrichtungen, wobei insbesondere auch zu bemerken ist, daß er einfedert, indem er sich mit einem Abschnitt 6, der im unbelasteten Zustand sich von der Befestigung an der Welle spiralförmig um diese erstreckt, an die Welle anschmiegt und so den gewünschten Federeffekt erzielt.

## Patentansprüche

1. Vorrichtung für die Bodenbearbeitung mit einer rotierend angetriebenen Welle (1), auf der mit axialem Abstand zueinander über den Umfang versetzte Zinken (3) angeordnet sind, wobei der Abstand (9) der Wellenachse (10) zum Boden (11) geringer ist als der Radius (8) des von der Zinkenspitze (7) beschriebenen Umkreises,
dadurch gekennzeichnet,
daß die Zinken (3) in Rotationsrichtung federnd ausgebildet sind und die Vorrichtung einen Anschlag (15, 17) aufweist, gegen den ein nach Kontaktverlust mit dem Boden in Rotationsrichtung nach vorne federnder Zinken (3) schlägt.

2. Vorrichtung gemäß Anspruch 1,
dadurch gekennzeichnet,
daß der Anschlag (17) an der Welle mitrotierend befestigt ist.

3. Vorrichtung gemäß Anspruch 2,
dadurch gekennzeichnet,
daß der Anschlag (17) zum Zinken (3) hin konvex ausgestaltet ist.

4. Vorrichtung gemäß Anspruch 2,
dadurch gekennzeichnet,
daß der Anschlag (17) mit den federnden Zinken (3) führenden Seitenwangen (18) versehen ist.

5. Vorrichtung gemäß einem oder mehreren der vorhergehenden Ansprüche,
dadurch gekennzeichnet,
daß der Zinken (3) an seinem zur Befestigung vorgesehenen Ende zu einem Auge (31) aufgerollt ist und mittels eines Querbolzens (32), der parallel zur Wellenachse verläuft, über Halterungen (33) an der Welle (1) befestigt ist, die sich senkrecht zur Wellenachse erstrecken.

6. Vorrichtung gemäß Anspruch 5,
dadurch gekennzeichnet,
daß die Halterung (33) einstückig mit den Seitenwangen (18) ausgebildet ist.

7. Vorrichtung gemäß Anspruch 1,
dadurch gekennzeichnet,
daß der Zinken (3) in einem Abschnitt (6), der sich von seiner Befestigung (4, 5) an der Welle (1) erstreckt, spiralförmig um die Welle (1) verläuft.

8. Vorrichtung gemäß Anspruch 1,
dadurch gekennzeichnet,
daß der Zinken (3) mit einer ihm parallel geschalteten Blattfeder (12) zusammenwirkt, die vorgeformt ist und mit steigender Einfederung des Zinkens (3) dessen Gesamtfedersteifigkeit erhöht.

9. Vorrichtung gemäß Anspruch 8,
dadurch gekennzeichnet,
daß die Blattfeder (12) mit einer den Zinken (3) umgreifenden Fangöse (13) versehen ist, die bei einer Rückfederung des Zinkens (3) eine Mitnahme der Blattfeder (12) bewirkt.

10. Vorrichtung gemäß Anspruch 1,
dadurch gekennzeichnet,
daß der Zinken (3) einen im wesentlichen rechteckigen Querschnitt aufweist und am auf den Boden wirkenden Ende (7) eine Schränkung (19) aufweist.

11. Vorrichtung gemäß Anspruch 1,
dadurch gekennzeichnet,
daß der Zinken (3) an seinem mit dem Boden zusammenwirkenden Ende (7) einen Bodenaufreißzahn (16) trägt.

12. Vorrichtung gemäß Anspruch 1,
dadurch gekennzeichnet,
daß sie wenigstens eine Reihe von Säscharen (26), aufweist, denen die Welle (1) zugeordnet ist, wobei die Zinken (3) zwischen den Säscharen (26) durchgreifen.
